# EUROPÄISCHE PATENTANMELDUNG

(11) **EP 1 191 801 A2**
(43) Veröffentlichungstag der Anmeldung: **27.03.2002**
(21) Anmeldenummer: 01000497.6
(22) Anmeldetag: 25.09.2001
(51) Int. Cl.: H04Q 7/32

(54) **Mobiles Kommunikationsnetzwerk**

(30) Priorität: 25.09.2000 AT 16182000
(71) Anmelder: Horvat, Gottfried, 1140 Wien (AT)
(72) Erfinder: Horvat, Gottfried, 1140 Wien (AT)
(74) Vertreter: Kliment, Peter

(57) **Zusammenfassung**

Mobiles Kommunikationsnetzwerk mit mindestens einer von einer mobilen Vermittlungszentrale (Mobile Switching Center) (1) gesteuerten Basisstation-Steuerung (Base Station Controller) (8), die eine Vielzahl von Zellensendern (10) ansteuert, von denen jeder ein bestimmtes Teilgebiet des Netzwerkes versorgt und mit einer Vielzahl von mobilen Endgeräten (11), z.B. Mobiltelefone, zusammenwirken, die Ausgabe-Einheiten, wie z.B. ein Display (17), aufweisen und mit jeweils mindestens einem Speicher (19) und einer SIM-Karte (21) versehen sind, die ebenfalls zumindest einen Speicher (23) aufweist, wobei in diesen Speichern (19, 23) auch schreibgeschützte und gegen Löschung geschützte Dateien abgelegt sind und die Zellsender (10) ständig Informationen aussenden, wobei, eine der schreibgeschützten und gegen Löschung geschützten Dateien eine Unterdrückung der Ausgabe bestimmter vom Zellsender (10) ständig ausgesandter Informationen auf einer Ausgabe-Einheit eines zugeordneten mobilen Endgerätes (11) unterbindet.

## Beschreibung

Die Erfindung bezieht sich auf ein mobiles Kommunikationsnetzwerk gemäß dem Oberbegriff des Anspruches 1.

Bei einem derartigen Netzwerk sind in einem betriebsbereiten mobilen Endgerät in einem diesen zugeordneten Speicher verschiedene Dateien, welche die Konfiguration ober auch die Teilnehmernummer betreffen, schreibgeschützt und gegen ein Löschen geschützt abgelegt. Diese Dateien können vom Benutzer daher, zum Unterschied von anderen Dateien, die z.B. vom Benutzer veränderbare Konfigurationen oder auch den Wählton betreffen, vom Benutzer nicht geändert werden.

Die üblichen mobilen Endgeräte sind meist mit einem als Ausgabe-Einheit dienenden Display versehen. Auf diesem erscheinen im Standby-Modus lediglich das Logo des Netzbetreibers und allenfalls noch Zeit- und Ortsangaben. Ansonsten ist diese Anzeigemöglichkeit nicht genutzt.

In WO 99/66670 A1 wird beschrieben, die SMS-Broadcast Nachrichten mit kostenpflichtigen Informationen nur jenen Teilnehmer zuzustellen, die diesen Dienst inskribieren und bezahlen. Es wird ausgeführt, die Statusvariable über die Luftschnittstelle zu verändern, jedoch nicht, dass sie vom Benutzer nicht verändert werden kann (Seite 12, Zeile 17 bis Seite 13, Zeile 2). Es wird davon ausgegangen, dass die meisten Benutzer technisch nicht in der Lage wären, Status-Variablen zu verändern (Seite 16, Zeilen 18-21). Das ist aber nicht ausreichend, um eine missbräuchliche Verwendung zu unterbinden. Gerade in letzter Zeit werden solche Anleitungen gezielt über Internet der breiten Öffentlichkeit in einer Form zur Verfügung gestellt, die es jedem Laien ermöglichen, solche Umkonfigurationen vorzunehmen.

In WO 97/41654 A1 wir das Aufbereiten von teilnehmerspezifischen Informationen und das Versenden derselben per SMS-Textnachricht an den betreffenden Benutzer beschrieben. Diese Daten können jedoch nicht unmittelbar und direkt auf dem Bildschirm des Endgerätes angezeigt werden, d.h. ohne manuelles Verzweigen in ein Untermenü, wie dies z.B. bei SMS-Textnachrichten der Fall ist. Weiters wird hier lediglich ein Mechanismus für explizit und einzeln inskribierte Dienste beschrieben aber nicht, wie Informationen, die unter Umständen zu einer Verbilligung des Gebrauchs des Endgerätes führen (also keine kostenpflichtigen Zusatzdienste) vom Teilnehmer auf Umwegen nicht deaktiviert werden können.

Ziel dieser Erfindung ist es, diese Nachteile zu vermeiden und ein mobiles Kommunikationsnetzwerk der eingangs erwähnten Art vorzuschlagen, das eine weitgehende Möglichkeit der Anzeigemöglichkeiten, insbesondere für Werbebotschaften, der zum überwiegenden Teil des Tages im Standy-Modus betriebenen Endgeräte zu ermöglichen.

Erfindungsgemäß wird dies bei einem mobilen Kommunikationsnetzwerk der eingangs erwähnten Art durch die kennzeichnenden Merkmale des Anspruches 1 erreicht.

Durch die vorgeschlagenen Maßnahmen ist es möglich, jedem Teilnehmer die Wahl zu lassen, ob er die Ausgabe-Einheit seines Endgerätes für die Anzeige von Informationen, insbesondere Werbung, zur Verfügung stellt, wobei in einem solchen Fall diesem Teilnehmer verschiedene Vergünstigungen eingeräumt werden können, oder er unter Verzicht auf solche Vergünstigungen die Anzeige seines Endgerätes eben nicht zur Verfügung stellt. Gleichzeitig ist aber auch sichergestellt, daß dieser Teilnehmer die Anzeige dieser Informationen während des Standby-Modus nicht unterdrücken kann. Dadurch ist gewährleistet, daß dieser Teilnehmer, sobald er sein Endgerät aktiviert, die entsprechenden Informationen bemerkt.

Es ist zwar bereits aus der FR 2 756 695 A3 bereits bekannt auf dem Display von Mobiltelefonen während deren Standby-Betriebs Werbebotschaften zur Anzeige zu bringen, doch besteht im bekannten Falle für den Teilnehmer keinerlei Wahlmöglichkeit.

Durch die Merkmale des Anspruches 2 ergibt sich der Vorteil, daß auch durch einen Wechsel des Endgerätes und Übernahme der SIM-Karte das Gerätes, die Unterdrückung der Anzeige von Informationen durch den Teilnehmer verhindert ist. Im Speicher der SIM-Karte befindet sich eine entsprechende Datei, die gegen eine Veränderung durch den Teilnehmer geschützt ist und in der eine Liste über jene Informationen enthalten ist, die im Standby Betrieb angezeigt werden sollen. Jedes Endgerät erhält laufend alle Informationen und entscheidet anhand der Liste, z.B. eine Liste von Kanalnummern, deren Informationen angezeigt werden, wobei das Endgerät die Informationen aller Kanäle erhält, jedoch lediglich die Informationen der in der Liste eingetragenen Kanäle angezeigt werden.

Durch die Merkmale des Anspruches 3 oder 4 ist es auf einfache Weise möglich, daß bei jedem Teilnehmer spezifisch ausgewählte Informationen zur Anzeige gebracht werden. Dies ist insbesondere für Werbebotschaften von Vorteil.

Die Erfindung wird nun anhand der Zeichnung näher erläutert. Dabei zeigen:
Fig. 1 schematisch ein mobiles Kommunikationsnetzwerk mit einer Cell-Broadcast Einrichtung,
Fig. 2 ein Blockschaltbild eines mobilen Endgerätes,
Fig. 3 schematisch ein Detail einer Cell Broadcast Einrichtung,
Fig. 4 ein Blockschaltbild einer Auswahleinrichtung für ein Cell-Broadcast System,
Fig 5 schematisch ein mobiles Kommunikationsnetzwerk mit einem Web-Server und Anbindung an das Internet und
Fig 6 ein Blockschaltbild einer Auswahleinrichtung für ein Web-taugliches System.

Ein mobiles Kommunikationsnetzwerk gemäß der Erfindung weist zumindest eine, beim dargestellten Beispiel drei, mobile Vermittlungszentrale(n) (Mobile Switching Center MSC) 1 auf, die miteinander vernetzt sind und für die Vermittlung und Zusammenschaltung von Teilnehmern sorgen.

Jede dieser mobilen Vermittlungszentralen 1 ist mit einem Teilnehmer-Datenspeicher 2, in dem verschiedene Daten eines jeden einzelnen Teilnehmers gespeichert sind, einer Schnittstelle 3 zu einem Datennetzwerk, einem Netzwerk-Management 4 zur Steuerung der mobilen Vermittlungszentralen 1, einer Cell-Broadcast Einrichtung 5, die zur Aussendung von verschiedenen für alle Teilnehmer oder einer Gruppe von Teilnehmern bestimmten Informationen vorgesehen ist, und einer Schnittstelle 6 verbunden, die zur Verbindung mit anderen Netzwerken dient. An die Cell-Broadcast Einrichtung 5 ist eine Auswahleinrichtung 7 angeschlossen, die für eine Auswahl von für einen bestimmten Teilnehmer vorgesehenen Informationen (Kanäle) sorgt, die dieser angezeigt bekommen soll.

Jeder mobilen Vermittlungszentrale 1 ist eine Basisstation-Steuerung (Base Station Controller) 8 nachgeordnet, die über Standleitungen oder Richtfunkstrecken 9 mit einer Vielzahl von Basisstationen bzw. Zellsendern 10, die jeweils ein bestimmtes Gebiet versorgen, verbunden ist. Diese stehen über elektromagnetische Wellen mit mobilen Endgeräten 11 in Verbindung.

Diese mobilen Endgeräte 11 werden dabei von dem jeweils nächsten Zellsender 10 mit Informationen versorgt.

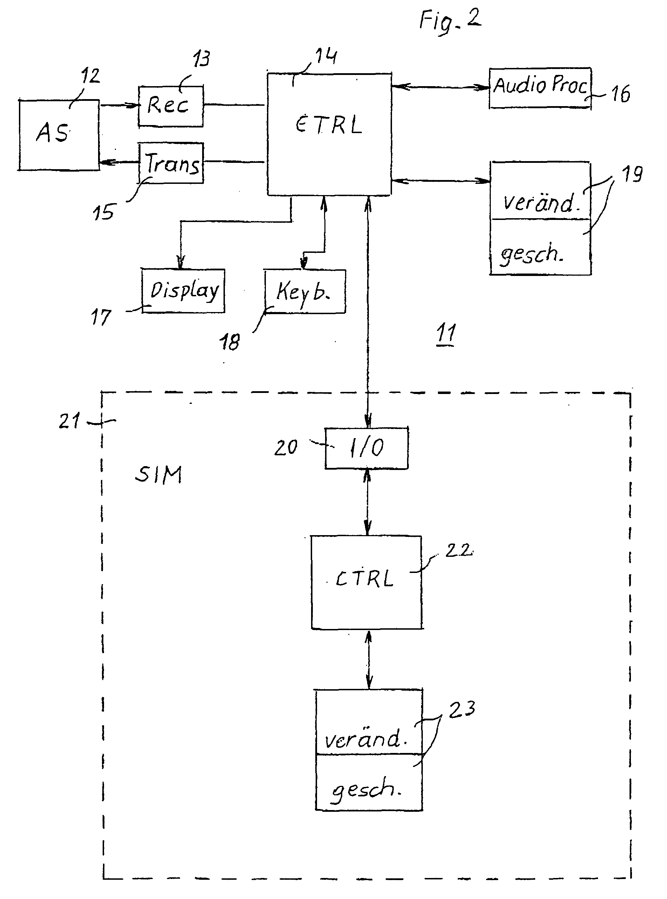

Wie aus der Fig. 2 zu ersehen ist, weist ein mobiles Endgerät 11 eine Antenne samt Antennenschaltung 12 auf, die über eine Empfängerschaltung 13 mit einem Prozessor 14 verbunden ist, der über eine Transmitterschaltung 15 mit der Antennenschaltung 12 verbunden ist.

Weiters ist der Prozessor 14 mit einem Audio-Prozessor 16 verbunden, der einen Lautsprecher (nicht dargestellt) steuert. Außerdem ist der Prozessor 14 mit einem Display 17 zur optischen Anzeige von Informationen und einer Tastatur 18 verbunden. Außerdem ist der Prozessor 14 noch mit einem Speicher 19 verbunden, in dem vom Teilnehmer veränderbare Dateien und vom Teilnehmer nicht veränderbare Dateien abgelegt sind.

Solche vom Teilnehmer veränderbare Dateien sind z.B. für die Festlegung des Wähltones oder anderer Konfigurationen vorgesehen. Vom Teilnehmer nicht veränderbare Dateien betreffen Konfigurationen, die vom Netzbetreiber vorgegeben werden.

Außerdem ist der Prozessor 14 mit einer Eingangs-Ausgangsschaltung 20 einer SIM-Karte 21 verbunden. Dabei ist diese Eingangs-Ausgangsschaltung 20 mit einem Prozessor 22 verbunden, der mit einem Speicher 23 verbunden ist.

In diesem Speicher 23 sind vom Teilnehmer veränderbare Dateien und vom Teilnehmer nicht veränderbare Dateien, wie z.B. die Teilnehmernummer, abgelegt. Zweckmäßigerweise ist in einer dieser vom Teilnehmer nicht veränderbaren Dateien festgelegt, daß bestimmte von der Auswahleinrichtung 7 festgelegte Informationen während des Standby Modus am Display zur Anzeige gebracht werden.

Dadurch ist sichergestellt, daß eben diese vom Netzbetreiber ausgewählten Informationen sicher bei dem betreffenden mobilen Endgerät zur Anzeige gebracht werden. Dies ist insbesondere für Werbebotschaften von Bedeutung.

Die Cell Broadcast-Einrichtung 5 weist eine Vielzahl von Kanälen auf, über die gleichzeitig eine Reihe von Informationen ausgesandt werden. Dabei sind eine Anzahl von Kanälen, z.B. der Kanal 17', für Informationen von überregionaler Bedeutung. Die Informationen dieser Kanäle werden über die entsprechende mobile Vermittlungszentrale (Mobile Switching Center) 1 und einer Basisstation-Steuerung (Base Station Controller) 8 allen Zellsendern 10 zugespielt und von diesen ausgestrahlt.

Eine andere Gruppe von Kanälen, z.B. 18', wird zwar netzweit ausgestrahlt, sendet aber regional unterschiedliche Informationen aus. Diese sind daher für die Aussendung von Informationen für den lokalen Bereich vorgesehen, und die einem bestimmten Bereich zugeordneten Zellsender 10 senden über diese Kanäle für den lokalen Bereich bestimmte Informationen aus.

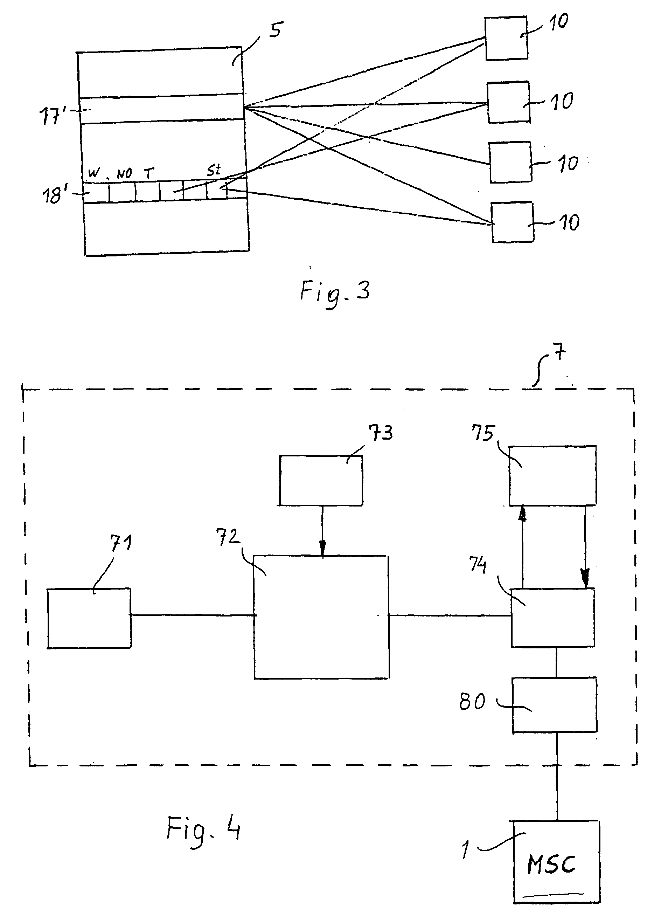

Den Vermittlungszentralen (Mobile Switching Center) 1 sind weiters Auswahleinrichtungen 7 zugeordnet, die in der Fig. 4 näher dargestellt sind.

Eine Auswahleinrichtung 7 weist einen Speicher 71 auf, in dem den Teilnehmer betreffende Daten gespeichert sind. Dabei können neben den Stammdaten des Teilnehmers auch statistische Daten, z.B. in welchen Gebieten Teilnehmer von dem betreffenden Teilnehmer angewählt werden und andere mit Vorlieben und Interessen des betreffenden Teilnehmers in Verbindung stehende Daten, eingeschrieben sein und laufend ergänzt werden.

Dieser Speicher ist mit einer zentralen Verarbeitungseinheit 72 verbunden, die weiters mit einem Kanalspeicher 73 verbunden ist, in dem Informationen über die Art der in den einzelnen Kanälen 17', 18' enthaltenen Informationen eingeschrieben sind.

Die zentrale Verarbeitungseinheit 72 ist weiters mit einer Aufbereitungseinheit 74 verbunden. Diese ist ihrerseits mit einem Listenspeicher 75 verbunden, in dem zu jedem Teilnehmer die Liste jener Kanäle eingeschrieben ist, die diesem während des Standby Betriebes seines Endgerätes 11 an diesem zur Anzeige gebracht wird. Diese Liste wird über eine Fernsteuereinrichtung 80 und die Vermittlungszentrale (Mobile Switching Center) 1 an das Endgerät übertragen und dort in den vor dem Überschreiben durch den Teilnehmer geschützten Speicher 23 eingeschrieben. So sind z.B. für den Teilnehmer XY die überregionalen Kanäle 17' und zwei regionale Kanäle 18' vorgesehen, welche letztere z.B. Werbebotschaften von im Bereich des betreffenden Zellsenders 10 angesiedelten Firmen senden.

Aufgrund der teilnehmerspezifischen Daten wählt die zentrale Verarbeitungseinheit 72 auf den betreffenden Teilnehmer zugeschnittene Kanäle und damit Informationen aus, die das Endgerät des betreffenden Teilnehmers während des Standby Betriebes auf dem Display zur Anzeige gebracht werden sollen.

Auf diese Weise ist es möglich, auf den betreffenden Teilnehmer bezogene Informationen auf dem Display des Endgerätes des betreffenden Teilnehmers zur Anzeige zu bringen, wobei sich die Auswahl von regionalen Kanälen 17' auf das Gebiet bezieht, in dem sich das Endgerät 11 des betreffenden Teilnehmers momentan befindet.

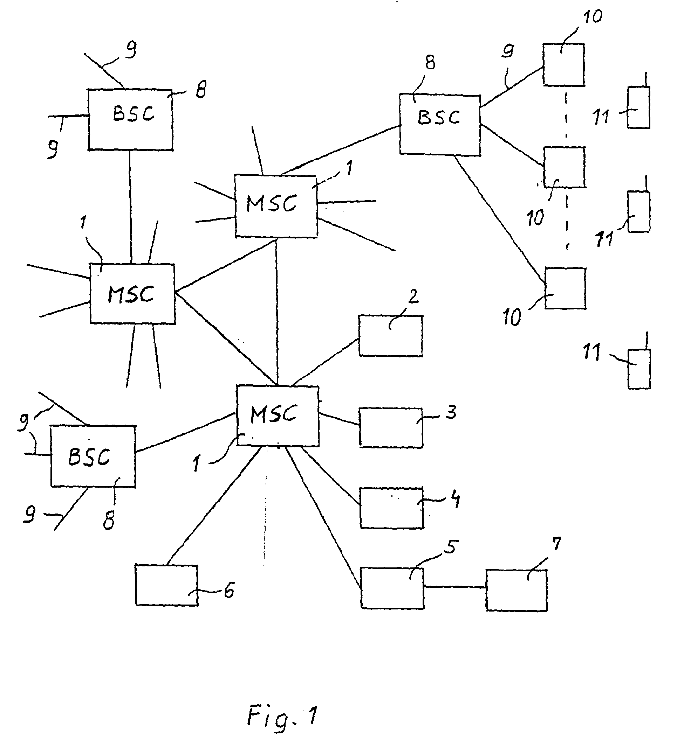

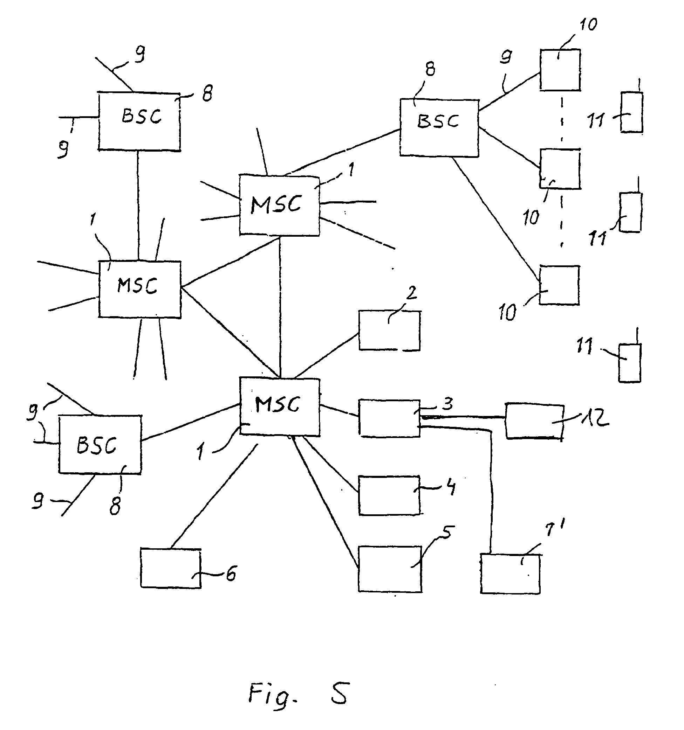

Die Ausführungsform nach der Fig. 5 unterscheidet sich von jener nach der Fig. 1 dadurch, daß eine Auswahleinrichtung 7' über die Schnittstelle 3, an der auch ein Internetanschluß 12 angeschlossen ist, mit der Vermittlungszentrale 1 (Mobile Switching Center) in Verbindung steht.

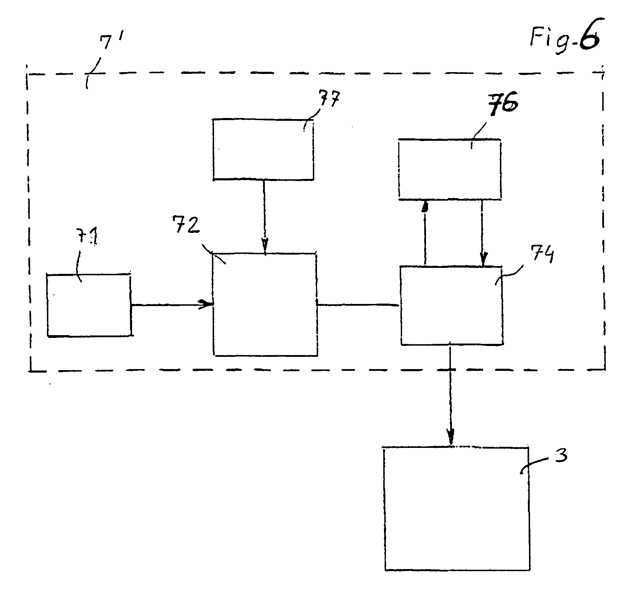

Die Auswahleinrichtung 7' nach der Fig. 6 entspricht im wesentlichen der Auswahleinrichtung 7 nach der Fig. 4. Dabei ist an der zentralen Verarbeitungseinheit 72 ein Speicher 77 angeschlossen, der Informationen über die Art von verschiedenen auf einem Web-Server 76 oder im Internet 12 enthaltenen Informationen enthält. Dabei ist der Web-Server 76 an die Aufbereitungseinheit 74 angeschlossen. Dabei kann auf die Fernsteuerung 80 verzichtet werden.

Aufgrund der im Speicher 71 enthaltenen teilnehmerspezifischen Daten schreibt die Aufbereitungseinheit 74 Informationen in eine einem bestimmten Teilnehmer zugeordnete Web-Seite ein, die in dem Web-Server 76 gespeichert ist.

Ist in dem Endgerät 11 des betreffenden Teilnehmers in einer gegen eine Beeinflussung durch den Teilnehmer geschützten Datei des Speichers 23 der SIM-Karte 21 des Endgerätes festgelegt, daß während des Standby-Betriebes des Endgerätes 11 die dem Teilnehmer zugeordnete Web-Seite abgerufen und zur Anzeige gebracht wird, so wird die entsprechende Web-Seite abgerufen und über die Vermittlungszentrale 1 und die nachgeordneten Netzteile ausgestrahlt und im Endgerät 11 des betreffenden Teilnehmers während des Standby-Betriebes zur Anzeige gebracht.

## Patentansprüche

1. Mobiles Kommunikationsnetzwerk mit mindestens einer von einer mobilen Vermittlungszentrale (Mobile Switching Center MSC) (1) gesteuerten Basisstation-Steuerung (Base Station Controller) (8), die eine Vielzahl von Zellensendern (10) ansteuert, von denen jeder ein bestimmtes Teilgebiet des Netzwerkes versorgt und mit einer Vielzahl von mobilen Endgeräten (11), z.B. Mobiltelefone, zusammenwirken, die Ausgabe-Einheiten, wie z.B. ein Display (17), aufweisen und mit jeweils mindestens einem Speicher (19) und einer SIM-Karte (21) versehen sind, die ebenfalls zumindest einen Speicher (23) aufweist, wobei in diesen Speichern (19, 23) auch gegen eine Beeinflussung durch den Teilnehmer geschützte Dateien abgelegt sind und die Zellsender (10) ständig Informationen aussenden, **dadurch gekennzeichnet, daß** eine der geschützten Dateien eine Unterdrückung der Ausgabe bestimmter vom Zellsender (10) ständig ausgesandter Informationen auf einem Ausgabe-Einheit eines zugeordneten mobilen Endgerätes (11) unterbindet.

2. Mobiles Kommunikationsnetzwerk nach Anspruch 1, **dadurch gekennzeichnet, daß** die geschützte Datei, die eine Unterdrückung der Ausgabe bestimmter vom Basissender (10) ständig ausgesandter Informationen unterbindet, im Speicher (23) der SIM-Karte (21) des Endgerätes (11) eingeschrieben ist.

3. Mobiles Kommunikationsnetzwerk nach Anspruch 1 oder 2, **dadurch gekennzeichnet, daß** der mobilen Vermittlungszentrale (Mobile Switching Center) (1) eine Auswahleinrichtung (7) zur Auswahl und Aussendung von auf einen bestimmten Teilnehmer des Netzwerkes abgestimmten Informationen vorgeschaltet ist, welche Einrichtung einen teilnehmerspezifische Daten enthaltenden Speicher (71), der mit einer zentralen Verarbeitungseinheit (72) verbunden ist, die ihrerseits mit einem Informationen über die Art von über verschiedene Kanäle ausgesandten Informationen enthaltenen Kanalspeicher (73) und einer Aufbereitungseinheit (74) verbunden ist, die aufgrund der kundenspezifischen Daten eine Auswahl von für einen bestimmten Teilnehmer vorgesehenen Kanäle (17', 18') vornimmt und diese in einen mit der Aufbereitungseinheit (74) verbundene Listenspeicher (75) einschreibt, in dem eine Liste jener Kanäle eingeschrieben ist, die am Endgerät (11) eines bestimmten Teilnehmers im Standby-Betrieb zur Anzeige gebracht werden, wobei die Aufbereitungseinheit (74) mit einer Fernsteuereinrichtung (80) verbunden ist, die über die Vermittlungszentrale (1), mit der sie in Verbindung steht, die geschützte Datei des Endgerätes (11) des betreffenden Teilnehmers, die eine Unterdrückung der Ausgabe bestimmter vom Zellsender (10) ständig ausgesandter Informationen auf einer Ausgabe-Einheit eines zugeordneten mobilen Endgerätes (11) unterbinden, beeinflußt.

4. Mobiles Kommunikationsnetzwerk nach Anspruch 1 oder 2, **dadurch gekennzeichnet, daß** der mobilen Vermittlungszentrale (Mobile Switching Center) (1) eine Auswahleinrichtung (7') zur Auswahl und Aussendung von auf einen bestimmten Teilnehmer des Netzwerkes abgestimmten Informationen vorgeschaltet ist, welche Einrichtung einen teilnehmerspezifische Daten enthaltenden Speicher (71), der mit einer zentralen Verarbeitungseinheit (72) verbunden ist, die ihrerseits mit einem Informationen über die Art von verschiedenen auf einem Web-Server (76) oder im Internet (12) enthaltenen Informationen (77) und einer Aufbereitungseinheit (74) verbunden ist, die aufgrund der teilnehmerspezifischen Daten Informationen in eine teilnehmerspezifische Webseite einschreibt, wobei die geschützte, eine Unterbindung der Ausgabe bestimmter Informationen unterbindende Datei des Endgerätes eine Unterdrückung des Abrufens der teilnehmerspezifischen Webseite unterbindet.
